(19) Europäisches Patentamt

European Patent Office

Office européen des brevets

(11) EP 0 518 362 B1

(12) EUROPEAN PATENT SPECIFICATION

(45) Date of publication and mention
of the grant of the patent:
04.09.1996 Bulletin 1996/36

(51) Int Cl.6: G02F 1/1335, G02B 6/08

(21) Application number: 92109929.7

(22) Date of filing: 12.06.1992

(54) **Image display device using liquid-crystal panel, liquid-crystal TV projector, and conical optical-element array used therein**

Bildanzeigevorrichtung mit Flüssigkristallfernsehprojektor und einer Matrix konischer optischer Elemente darin

Dispositif d'affichage d'image utilisant un télé-projecteur à crystaux liquides et réseau d'éléments optiques coniques utilisés dans un tel dispositif

(84) Designated Contracting States:
AT BE CH DE DK ES FR GB GR IT LI LU MC NL PT SE

(30) Priority: 14.06.1991 JP 169130/91

(43) Date of publication of application:
16.12.1992 Bulletin 1992/51

(73) Proprietor: OMRON CORPORATION
Kyoto-shi, Kyoto 616 (JP)

(72) Inventors:
• Aoyama, Shigeru, c/o Intellectual Prop. Cent.
Nagaokakyo-City Kyoto 617 (JP)
• Nishizaki, Osamu, c/o Intellectual Prop. Cent.
Nagaokakyo-City Kyoto 617 (JP)

(74) Representative: WILHELMS, KILIAN & PARTNER
Patentanwälte
Eduard-Schmid-Strasse 2
81541 München (DE)

(56) References cited:
EP-A- 0 267 686          EP-A- 0 357 070

• PATENT ABSTRACTS OF JAPAN vol. 14, no. 289
(P-1065)21 June 1990 & JP A 2089025
• ELECTRONICS. DE 1984 A 1985 : ELECTRONICS
WEEK vol. 58, no. 16, 22 April 1985, New York,
US, pp 56-60; H. BIERMAN and D.M. WEBER
"New display formats give users better show for
fewer bucks"
• The Concise Oxford Dictionary, Sixth Edition.

Remarks:
The file contains technical information submitted after the application was filed and not included in this specification

## Description

## BACKGROUND OF THE INVENTION

Field of the Invention:

This invention relates to an image display device using a liquid-crystal panel, a liquid-crystal TV projector, and an array of conical optical elements used by the display device and the TV projector.

Description of the Related Art:

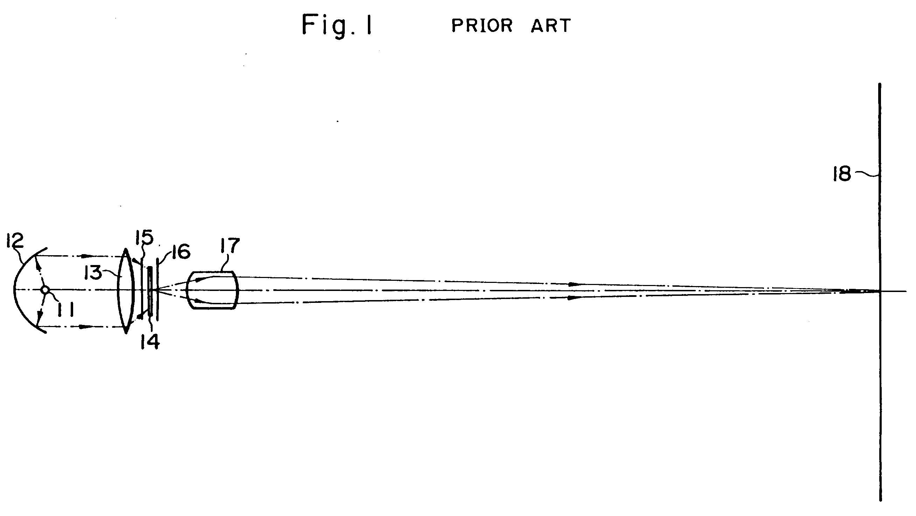

Fig. 1 illustrates the overall optical arrangement of a liquid-crystal TV (television) projector.

Light emitted by a light source 11 is reflected by a parabolic mirror 12 placed in back of the light source 11, whereby the light is rendered substantially parallel. (As will be described below, the light is not rendered perfectly parallel but possesses a certain spread since the light source 11 has some size, e.g., a diameter on the order of 2 mm, and because the light is incoherent.) The reflected light is condensed by a condenser lens 13. A liquid-crystal panel 14 is disposed on the optical path of the light condensed by the condenser lens 13. Two polarizers 15, 16 whose directions of polarization perpendicularly intersect each other are provided, one (15) in back of the liquid-crystal panel 14 and one (16) in front, respectively.

As will be set forth below, the liquid-crystal panel 14 has a multiplicity of pixels the optical transmittance of which is controlled by an externally applied video signal and by the cooperation of the polarizers 15 and 16. As a result, an image represented by the video signal appears on the surface of the liquid-crystal panel 14. The image represented by the light that has passed through the liquid-crystal 14 and the polarizers 15, 16 is formed on a distant screen 18 through an image-forming lens (projecting lens) 17.

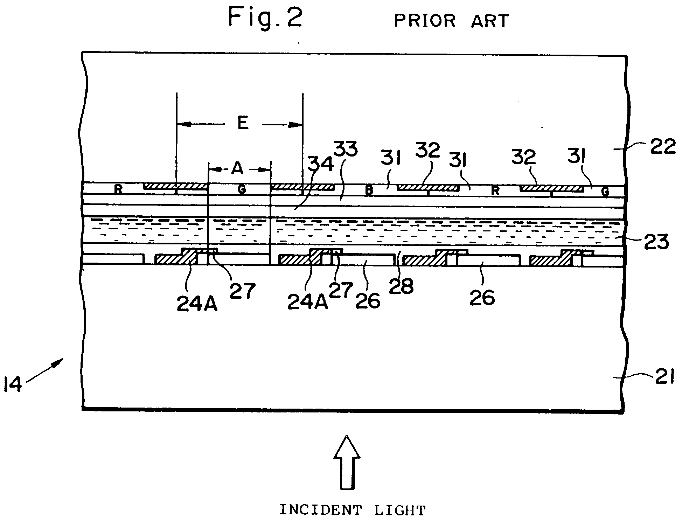

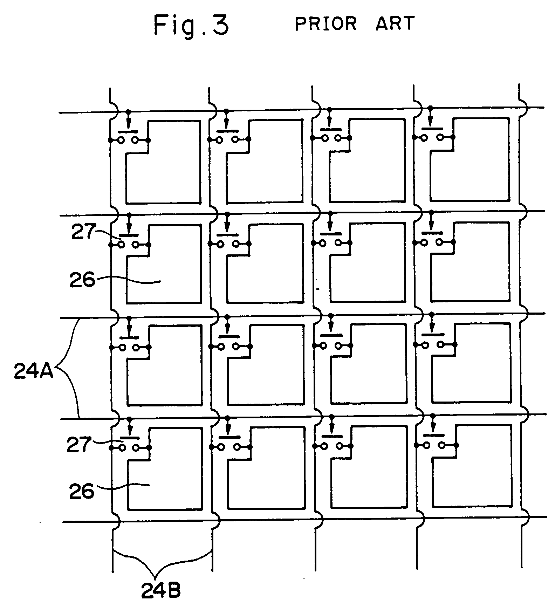

Fig. 2 schematically illustrates a portion of an enlarged cross section of the liquid-crystal panel 14. An insulating film and the internal structure of switching elements are not illustrated. Fig. 3 shows an equivalent circuit of pixel electrodes, switching elements and conductive wiring patterns formed on the surface of one of two glass substrates constructing the liquid-crystal panel 14.

As shown in Figs. 2 and 3, the liquid-crystal panel 14 basically comprises two glass substrates 21, 22 arranged with a small spacing (e.g., on the order of 2 μm) between them, and a liquid crystal 23 filling the gap between the glass substrates 21 and 22. A number of uniformly spaced, horizontally extending scanning electrodes 24A and a number of uniformly spaced, vertically extending signal electrodes 24B are formed on the inner surface of one glass substrate 21. The scanning electrodes 24A and the signal electrodes 24B are insulated from each other (the signal electrodes 24B are omitted from the drawing of Fig. 2). In the description that follows, the scanning electrodes 24A and the signal electrodes 24B shall be called a conductive wiring pattern 24 when referred to collectively.

Pixel electrodes 26 are formed in a matrix configuration and in a mutually insulated state in the areas delimited by the scanning electrodes 24A and signal electrodes 24B. Each pixel electrode 26 is connected to the corresponding adjacent signal electrode 24B via a three-terminal switching element (a thin-film transistor comprising a FET, by way of example). Each switching element 27 has a control terminal (e.g., a gate terminal) connected to the corresponding adjacent scanning electrode 24A. Furthermore, an alignment film 28 is formed on the entire inner surface of the glass substrate 21 so as to cover the the electrodes 24A, 24B and 26.

Formed on the inner surface of the other glass substrate 22 are R, G and B color filters 31 at positions opposing the pixel electrodes 26, as well as light-shielding films (a black matrix) 32 at positions corresponding to the scanning electrodes 24A and signal electrodes 24B. It is well known that the array of the color filters 31 may be a triangular array, a mosaic array, a stripe array, etc.

A common electrode 33 is formed on the entire inner surface of the glass substrate 22 so as to cover the color filters 31, and an alignment film 34 is formed on the common electrode 33.

The pixels electrodes 26 and the common electrode 33 consist of a transparent electrically conductive film (e.g., an ITO film). On the other hand, the scanning electrodes 24A, the signal electrodes 24B and the light-shielding film 32 are opaque films consisting of metal or the like. Accordingly, the only areas through which incident light is capable of being transmitted are the areas of the pixel electrodes 26 delimited by the scanning electrodes 24A and the signal electrodes 24B (these areas coincide with the areas not covered by the light-shielding film 32). The areas through which light is capable of passing shall be referred to as apertures A. One pixel is an area demarcated by the center lines of the scanning electrodes 24A and the center lines of the signal electrodes 24B (this area coincides with the area demarcated by the center lines of the light-shielding films 32). Each such area shall be referred to as pixel E.

The display of an image in the liquid-crystal panel 14 is performed in a manner which will now be described.

A scanning voltage is successively applied to the scanning electrodes 24A. As a result of the scanning voltage applied to the scanning electrodes 24A, the switching elements 27 of the corresponding pixels are turned on scan by scan and, hence, the scanning electrodes 24B and the pixel electrodes 26 are connected. In each scan, a voltage equivalent to the video signal representing the image to be displayed is successively impressed across the signal electrodes 24B and the common electrode 33. Accordingly, a voltage conforming to the video signal is applied across the pixel electrode 26 and common electrode 33 in each pixel.

The liquid crystal 23 within the liquid-crystal 14 is aligned in one direction in the absence of applied voltage across a pixel electrode 26 and the common electrode 33. The direction of this alignment agrees with the direction of polarization of the polarizer 15 disposed on the side of the incident light. The incident light of random polarization from the light source 11 is converted into linearly polarized light by the polarizer 15. The linearly polarized light passes through the liquid-crystal panel 14 while the direction of polarization thereof is preserved. Since the direction of polarization of the polarizer 16 on the side of the exiting light perpendicularly intersects the direction of polarization of the polarizer 15 on the light-incident side, the light which has passed through the liquid-crystal 14 does pass through the polarizer 16 on the side of the exiting light.

When an appropriate voltage (equivalent to the white level of the video signal) is impressed across a pixel electrode 26 and the common electrode 33 of the liquid-crystal panel 14, the direction of alignment of the liquid crystal 23 twists by 90° in the form of a helix. When the linearly polarized light resulting from the conversion performed by the polarizer 15 on the light-incident side passes through the liquid-crystal panel 14, the direction of polarization thereof is rotated by 90°. Since the 90°-rotated direction of polarization of the emergent light from the liquid-crystal panel 14 coincides with the direction of polarization of the polarizer 16 on the side of the exiting light, this light is transmitted by the polarizer 16.

The rotational angle of the direction of alignment of liquid crystal 23 is dependent upon the voltage impressed across the pixel electrode 26 and common electrode 33 of the liquid-crystal panel 14.

Accordingly, in the scanning of the liquid-crystal panel 14 described above, the amount of light transmitted varies in dependence upon the voltage corresponding to the video signal applied across the electrodes 26 and 33 pixel by pixel, and an image represented by the video signal appears by virtue of the liquid-crystal panel 14 and polarizers 15, 16.

In each pixel E of the liquid-crystal panel 14 described above, the only portion which transmits the incident light is the aperture A.

Recent advances in obtaining better picture quality and higher resolution have been accompanied by a reduction in the size of the pixel E (an example of which is a pixel having a length of 100 μm on one side). However, it is required that the conductive pattern 24 (the scanning electrodes 24A and the signal electrodes 24B) stretch around the periphery of every pixel. When the width of the conductive pattern 24 is reduced, yield and reliability decline and there is an increase in electrical resistance. This means that the conductive pattern 24 cannot be made very slender. Inevitably, therefore, the percentage of the area of aperture A in the pixel E is reduced. There are even cases where the ratio of the area of pixel E to the area of aperture A ranges from 3:

1 to 4:1 or worse. When such is the case, the amount of light capable of being transmitted by the liquid-crystal panel 14 diminishes and the screen becomes too dark.

In order to solve this problem, an arrangement in which a microlens array 37 is provided on the light-incident side of the liquid-crystal panel 14 has been proposed (for example, see JP-A-6435416), as illustrated in Fig. 4.

The microlens array 37 comprises a substrate 39 and a number of microlenses (convex lenses) 38 arrayed in two dimensions on the substrate 39. The microlenses 38 are arrayed at positions corresponding to the apertures A of the liquid-crystal panel 14. The microlenses 38 are provided for the purpose of collecting light at the corresponding apertures A by condensing the incident light.

In a case where the light incident upon a microlens 38 is perfectly parallel light and coherent, it is possible by the condensing action of the microlens 38 to form a spot small enough to fall completely within the aperture A.

However, the actual light source in a liquid-crystal TV projection does not emit coherent light, and the light possesses a certain spread rather than being perfectly parallel. As a consequence, the incident light cannot be condensed by the microlens 38 in such a manner that the beam spot becomes smaller than the aperture A.

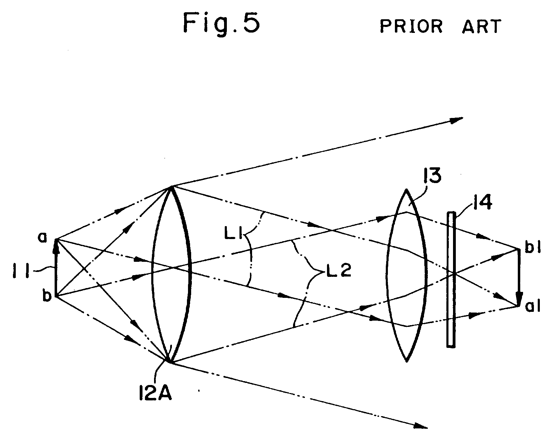

Fig. 5 illustrates an equivalent optical system from the light source to the liquid-crystal panel of the liquid-crystal TV projector depicted in Fig. 1. Here the parabolic mirror 12 is replaced by a collimator lens 12A. The optical effects of the parabolic mirror 12 placed in back of the light source 11 and the collimator lens 12A placed in front of the light source 11 are equivalent. The light source 11 is indicated by the arrow ab in Fig. 5. The polarizers 15, 16 are omitted.

The light source 11 has finite size (2 mm, for example, as set forth earlier). The light which has exited from one end a of the light source 11 has its image formed at a1 through the lenses 12A, 13, as indicated by L1. The light which has exited from the other end b of the light source 11 has its image formed at bl, as indicated by L2. As a result, an image albl of the light source is formed in front of the lens 13.

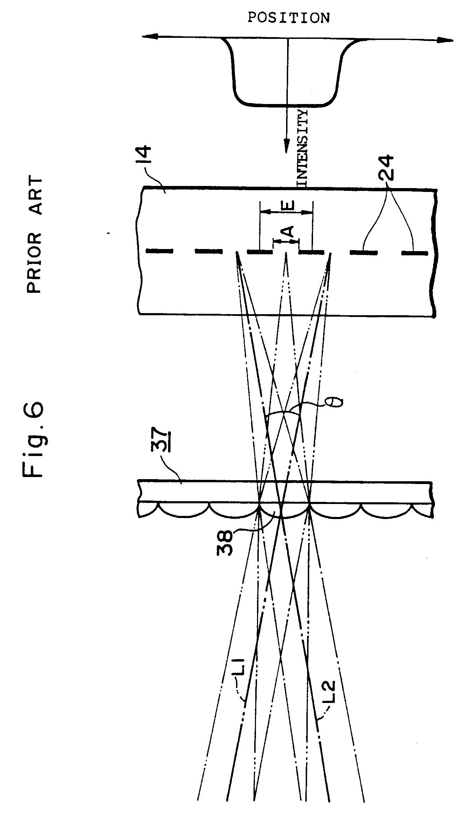

Fig. 6 illustrates, in enlarged form, the optical relationship between the liquid-crystal panel 14 and the microlens array 37 disposed on the light-incident side. Only the conductive wiring pattern 24 is illustrated as shown in Fig. of liquid-crystal panel 14; other components are deleted from the drawing.

The light L1 emitted from the end a of the light source 11 and the light L2 emitted from the other end b of the light source is not parallel but has a spread angle θ. With regard to a single microlens 38 from among the array 37 thereof, the light incident upon the microlens 38 forms a fairly large spot on the conductive wiring pattern 24 within the liquid-crystal panel 14. The intensity distribution of this spot is shown on the right side of Fig.

6. The spot has a size large enough to fully cover more than one pixel E. A fair amount of light is blocked by the conductive wiring pattern 24 and does not reach the light-emergent side.

An image display device according to the preamble of claim 1 is known from JP-A-2 089 025.

SUMMARY OF THE INVENTION

An object of the present invention is to provide a liquid-crystal TV projector capable of projecting an image which is a bright as possible.

Another object of the present invention is to provide an image display device which employs a liquid-crystal panel capable of displaying an image which is as bright as possible.

A further object of the present invention is to provide an array of conical optical elements capable of being used ideally in the above-mentioned liquid-crystal TV projector and image display device.

The invention is as defined in claims 1 and 15.

It goes without saying that the image display device according to the invention is applicable not only to a liquid-crystal TV projector but also to the display device of an ordinary television and to other display devices as well.

Other features and advantages of the present invention will be apparent from the following description taken in conjunction with the accompanying drawings, in which like reference characters designate the same or similar parts throughout the figures thereof.

BRIEF DESCRIPTION OF THE DRAWINGS

Fig. 1 is a diagram illustrating the optical arrangement of a liquid-crystal TV projector;
Fig. 2 is an enlarged sectional view of a liquid-crystal panel;
Fig. 3 is an equivalent circuit showing the wiring pattern of the liquid-crystal panel;
Fig. 4 is a partially cut-away perspective view showing an example of the prior art, in which a microlens array is disposed on the light-incident side of the liquid-crystal panel;
Fig. 5 is a diagram showing an equivalent optical system of a liquid-crystal TV projector;
Fig. 6 is a diagram of an optical system illustrating a problem encountered in the prior art;
Fig. 7 is a partially cut-away perspective view showing an embodiment of the present invention;
Figs. 8a and 8b are a side view and sectional view, respectively, illustrating a frustum optical element;
Fig. 9 is a diagram illustrating the manner in which virtual light sources are formed by a frustum optical-element array;
Fig. 10 is a diagram illustrating the manner in which virtual light sources are imaged by a microlens array;

Fig. 11 is a diagram illustrating an embodiment in which a polarizer is arranged between a microlens array and a liquid-crystal panel;
Fig. 12 is a partially cut-away perspective view showing an embodiment in which a microlens array is used as a virtual light-source forming device;
Fig. 13 is a diagram illustrating the manner in which virtual light sources are formed by a microlens array;
Fig. 14 is a diagram illustrating the manner in which virtual light sources are imaged by a microlens array;
Figs. 15a and 15b are diagrams illustrating a structure for mounting a microlens array in a liquid-crystal panel; and
Figs. 16a is a perspective view of a microlens array, Fig. 16b a side view, and Figs. 16c, 16d perspective views illustrating cylindrical lens arrays.

DESCRIPTION OF THE PREFERRED EMBODIMENT

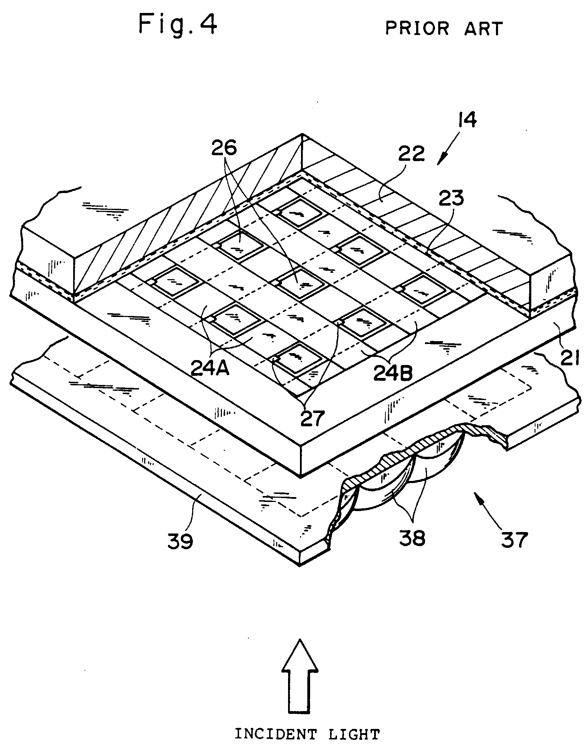

In the description of the embodiment to follow, components identical with those shown in Figs. 1 through 6 are designated by like reference characters and need not be described again in detail.

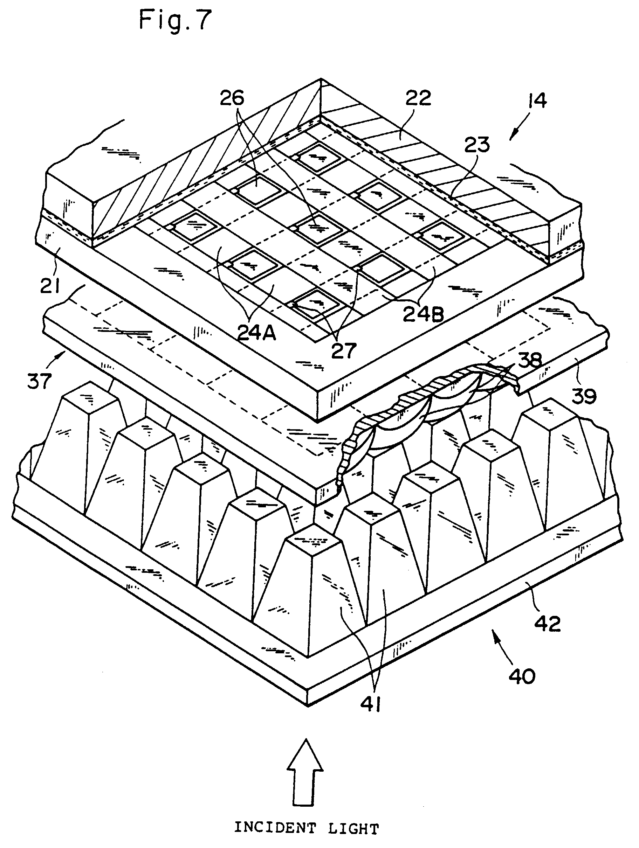

Fig. 7 illustrates a microlens array 37 and a frustum optical-element array 40 disposed on the entrant-light side of the liquid-crystal panel 14. The frustum optical-element array 40, the microlens array 37 and the liquid-crystal panel 14 are arranged in the order mentioned along the traveling direction of the incident light. In connection with Fig. 1, the conical optical-element array 40 and the microlens array 37 are provided between the condenser lens 13 and the liquid-crystal panel 14. The position of the polarizer 15 will be described later.

The frustum optical-element array 40 is constituted by a transparent body and comprises a substrate 42 and a multiplicity of frustum optical elements 41 fixedly arrayed in two dimensions on the substrate 42. The frustum optical elements 41, microlenses 38 and pixels E (apertures A) are in one-to-one correspondence, and mutually corresponding ones of these elements, lenses and pixels are arrayed on a straight line lying parallel to the optic axis of the optical system shown in Fig. 1.

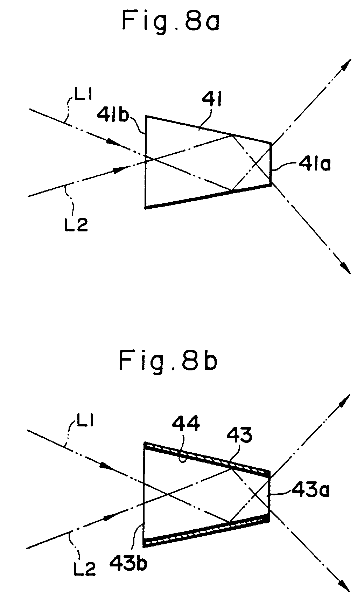

In this embodiment, each frustum element 41 has a shape obtained by sectioning the apex of a quadrangular pyramid by a plane parallel to the base of the cone. As shown in Fig. 8a, the face which is the base of the quadrangular pyramid is an aperture 41b on the side at which the incident light enters, and the face formed by cutting off the apex is an aperture 41a on the side from which light exits. The area of the aperture 41a on the emergent-light side is smaller than the area of the aperture 41b on the light-incident side.

Light rays L1, L2 incident upon the frustum optical element 41 from the aperture 41b on the light-incident side are totally reflected at the side surfaces of the frustum optical element 41 and emerge from the emergent-side aperture 41a while diverging. Preferably, the shape of the frustum optical element 41 is so designed that the incident light rays L1, L2 will emerge upon being total reflected only one time at the side surfaces of the element.

The aperture 41a on the light-emergent side of the frustum optical element serves as a virtual light source. The light emerges from the aperture 41a just as if the aperture 41a were a light source.

As will be described below in detail, the size of the aperture 41a on the light-emergent side of the frustum optical element 41 should be the same as that of the aperture A inside the liquid-crystal panel 14, through this depends also upon the image-forming magnification of the optical system constituted by the microlens 38. The reason is that if the image-forming magnification of the optical system is 1, a spot having a size the same as that of the light source can be formed.

The frustum optical-element array 40 described above can be fabricated by EB (electron-beam) lithography, a light exposure method or grinding method. Mass production is possible using a molding method that employs a mold (an injection molding method or a molding method using a resin that is hardened by infrared radiation).

The shape of the frustum optical element 41 is not limited to a quadrangular pyramid. Other shapes that can be adopted are a circular cone, a hexagonal pyramid and the like.

Fig. 8b illustrates another example of a frustum optical element. Here a frustum optical element 43 is hollow and pyramidal in shape and includes an aperture 43b on the light-incident side and an aperture 43a on the light-emergent side, with the area of the latter aperture being smaller than that of the former aperture. A reflecting film (e.g., a reflecting film made of metal) 44 is formed on the inner peripheral surface of the frustum optical element 43. Light rays L1, L2 which impinge upon the interior of the frustum optical element 43 from the aperture 43b on the light-incident side emerge from the aperture 43a on the light-emergent side upon being mirrored by the reflecting film 44, preferably only one time.

Besides the plano-convex lens of the kind illustrated in Fig. 7, other examples of lenses which can be used as the microlenses 38 constructing the microlens array 37 are a double-convex lens, a Fresnel lens, a meniscus lens, a cylindrical lens and the like. The details will be set forth later. The microlens array 37 also can be fabricated by the methods mentioned above.

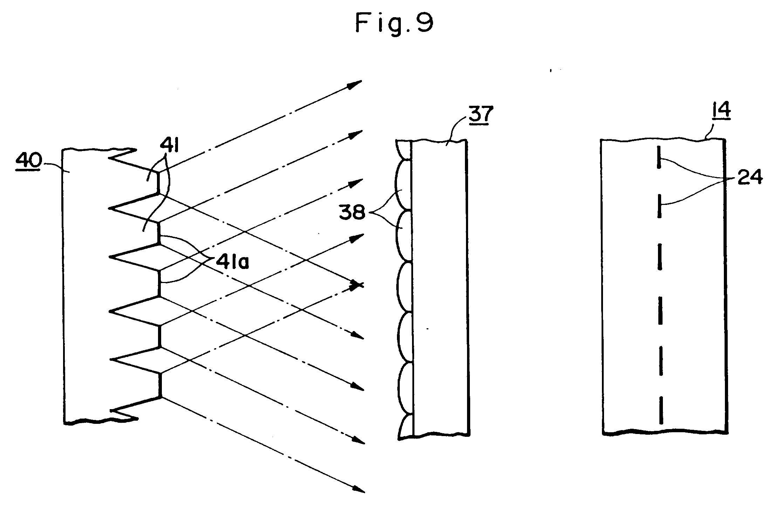

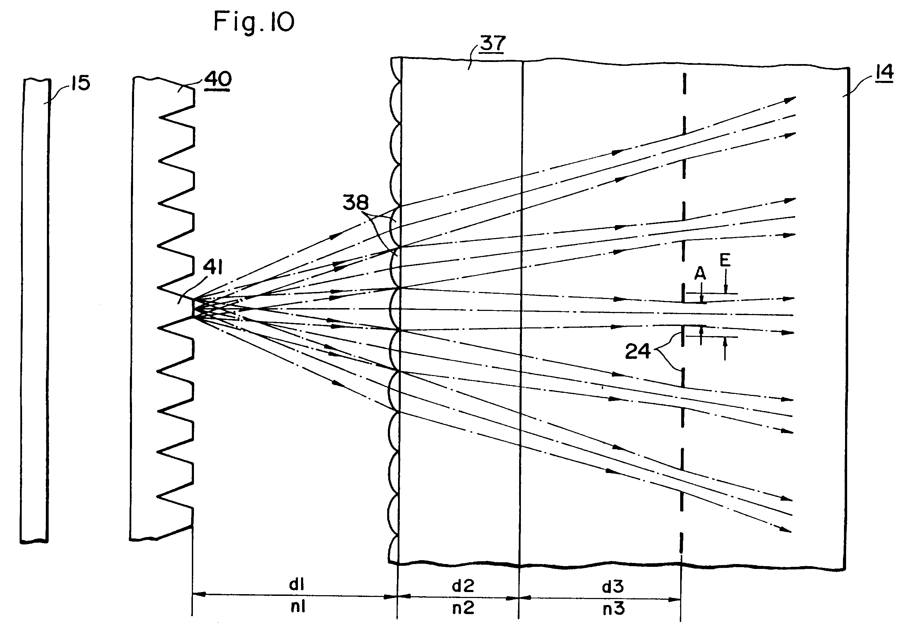

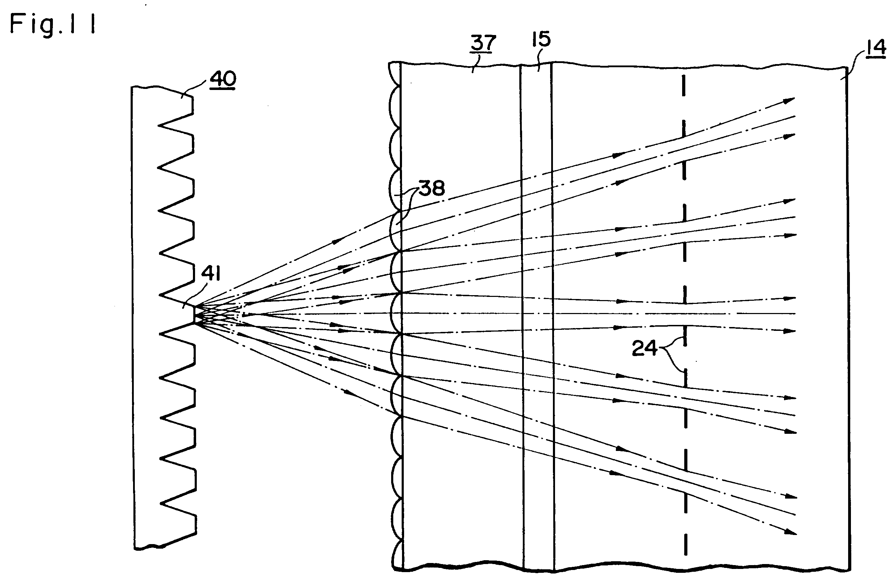

Fig. 9 shows the positional relationship among the frustum optical-element array 40, the microlens array 37 and the liquid-crystal panel 14, as well as the manner in which light is emitted from the frustum optical-element array 40. In this diagram and in Figs. 10 and 11 illustrated below, only the conductive wiring pattern 24 is shown on the liquid-crystal panel 14.

Light emitted by the light source 11 and incident upon the frustum optical-element array 40 through the condenser lens 13 emerges from the apertures 41a on the light-emergent side of the respective frustum optical elements 41 while diverging. Accordingly, as seen from the microlens array 37 or liquid-crystal panel 14, a multiplicity of very small light sources appear to be arrayed in two dimensions.

Fig. 10 illustrates the manner in which the light which has emerged from one frustum optical element 41 of the frustum optical-element array 40 has its image formed on the liquid-crystal panel 14 through the microlens array 37. The polarizer 15 is disposed on the light-incident side of the frustum optical-element array 40.

Let d1 represent the distance between the frustum optical-element array 40 and the microlens array 37, nl the refractive index of the material (generally air) between the two arrays, d2 the thickness of the microlens array 37 (the substrate thereof), n2 the refractive index of the microlens array, d2 the thickness of the glass substrate 21 of the liquid-crystal panel 14 on the light-incident side, and n3 the refractive index of this glass substrate.

In the equation

$$(d1/n1)/[(d2/n2)+(d3/n3)] = C/D \qquad (1)$$

d1, d2, d3, n1, n2, n3 are decided in such a manner that C/D or D/C will be a positive integer.

In a case where this requirement is satisfied, the light which has emerged from the frustum optical-element array 41 will have its image formed exactly on the apertures A within the liquid-crystal panel 14 through respective ones of several microlenses 38 of the microlens array 37.

In a case where the relation C/D = 1 has been established, the size of the spot formed on the aperture A becomes approximately equal to the size of the aperture 41a on the light-emergent side of the frustum optical-element array 41 (the size of the virtual light source). The size of the spot formed on the aperture A becomes smaller than the size of the aperture 41a on the light-emergent side when C/D is set to be equal to 2, 3, etc.

Fig. 10 illustrates a case where the relations n1 = 1, n2 = n3 = 1.5 hold.

Thus, almost all of the light which exits from the frustum optical-element array 41 is condensed within the aperture A inside the liquid-crystal panel 14 and is not projected upon the conductive wiring pattern 24 at the periphery of the aperture. The same holds true for the light which exits from the other frustum optical elements 41. By virtue of such an arrangement, the image which appears from the liquid-crystal panel 14 is bright.

Even if the foregoing requirements are not satisfied, the light which has exited from the frustum optical element 41 is condensed at least by the microlens 38 corresponding thereto and the image of the light source is focused within the aperture A corresponding to this optical element. Since it is considered that the light intensity of the image of this light source is the greatest and that the light intensities of the images produced by the peripheral microlenses 38 are smaller, loss of light is not that great and the brightness of the image can be assured to a certain extent.

In a case where the frustum optical-element array 40 or microlens array 37 is fabricated using a resin material (e.g., polycarbonate or the like), the arrays 40, 37 will possess a birefringence characteristic. In the arrangement of Fig. 10 in which the polarizer 15 is disposed on the light-incident side of the arrays 40, 37, an unfortunate consequence is that the light that has been converted into linearly polarized light by the polarizer 15 is converted into elliptically polarized light owing to the birefringence characteristic of the arrays when the light passes through them. When this occurs, some of the light unfortunately passes through the liquid-crystal panel 14 and the polarizer 16 even in a state in which no voltage is applied to the liquid-crystal panel 14.

A modification depicted in Fig. 11 illustrates an arrangement in which the above-mentioned problem is solved. Here the polarizer 15 is placed between the microlens array 37 and the liquid-crystal panel 14.

In accordance with an arrangement of this kind, the incident light, which is natural light (randomly polarized light), is converted into linearly polarized light immediately before it impinges upon the liquid-crystal panel 14. Therefore, even if the frustum optical-element array 40 or microlens array 37 possesses a birefringence characteristic, the birefringence characteristic has no effect. Accordingly, a clear image in which the difference in brightness between dark and bright portions is large is obtained.

In the case where the polarizer 15 is disposed as shown in Fig. 11, d4/n4 should be added to the denominator on the left side of Eq. 1, in which d4 represents the thickness of the polarizer 15 and n4 the refractive index thereof.

By providing the glass substrate 21 of the liquid-crystal panel 14 with the function of the polarizer 15 (that is, by constructing the substrate 21 from a polarizing plate), the need for the polarizer 15 can be eliminated. It is permissible to affix a polarizing film to the glass substrate 21. In addition, the substrate of the microlens array 37 can be made a polarizing plate. For example, a number of the microlenses 38 can be formed on a polarizing film.

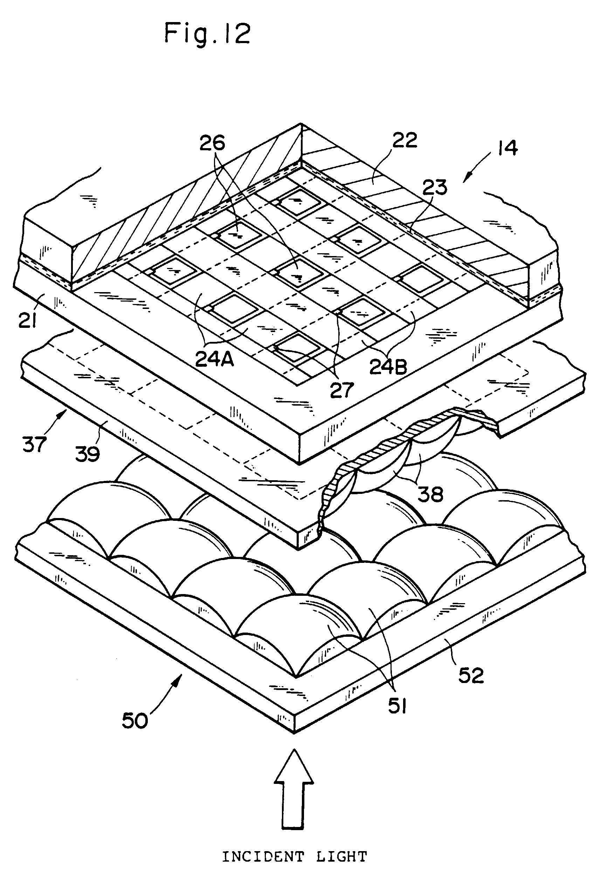

Fig. 12 illustrates another embodiment of the invention.

In Fig. 12, a microlens array 50 is provided on the light-incident side of the microlens array 37 instead of the frustum optical-element array as the device for forming the virtual light sources. The microlens array 50 may have a construction the same as that of the microlens array 37. The microlens array 50 comprises a substrate 52 and a number of microlenses 51 arrayed two-dimensionally on the substrate 52. The microlenses 51 of the microlens array 50 and the microlenses 38 of the microlens array 37 are in one-to-one correspondence. Mutually corresponding ones of the microlenses 51, 38 and apertures A of the liquid-crystal panel 14 lie on a straight line that is parallel to the optic axis.

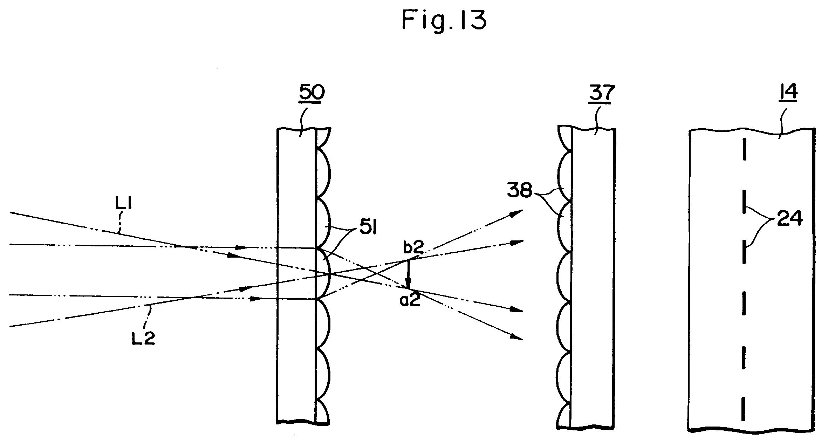

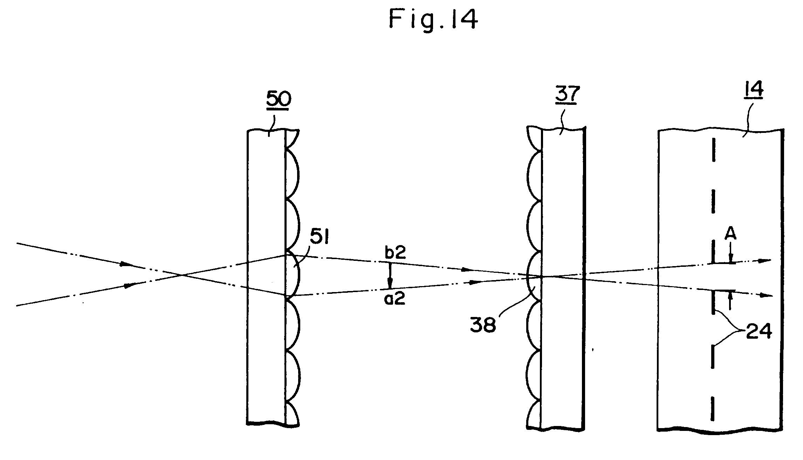

Fig. 13 shows the positional relationship among the microlens array 50, the microlens array 37 and the liquid-crystal panel 14, as well as the manner in which a virtual light source a2b2 is formed by a microlens 51 of the microlens array 50. In Figs. 13 and 14, the polarizer 15 is omitted, but it goes without saying that the polarizer 15 can be disposed in the manner shown in Fig. 10 or Fig. 11. In addition, only the conductive wiring pattern 24 is shown in the liquid-crystal panel.

The light source a2b2 has its image formed in front of the microlens 51 owing to impingement of light rays L1, L2 on the microlens 51 of the microlens array 50. The light source a2b2 serves as a virtual light source. The size of the light source a2b2 preferably is the same as that of the aperture A, as mentioned earlier. Virtual light sources of the kind a2b2 are formed in front of all of the microlenses 51.

Fig. 14 illustrates the manner in which the virtual light source a2b2 has its image formed at the position of the aperture A of the liquid-crystal panel 14 by the microlens 38 of microlens array 37. Since a large amount of light emerges from the liquid-crystal panel 14 through the aperture A, in exactly the same manner as described earlier with reference to Figs. 10 and 11, a bright image can be obtained.

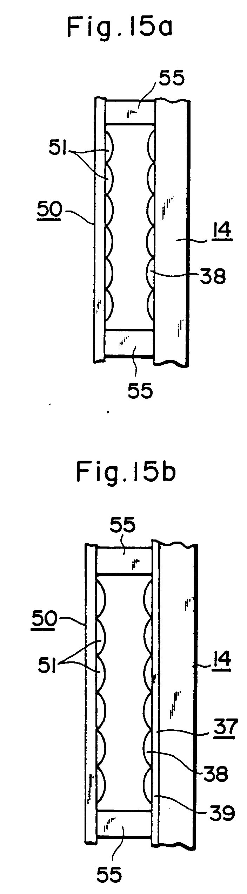

Figs. 15a and 15b illustrate an example of the unified structure of the liquid-crystal panel 14 and microlens arrays 37, 50.

In Fig. 15a, the microlenses 38 are secured directly to the glass substrate (or polarizer) on the light-incident side of the liquid-crystal panel 14. The microlens array 50 is attached to the liquid-crystal panel 14 via a spacer 55.

In Fig. 15b, the substrate 39 of the microlens array 37 is secured to the liquid-crystal panel 14, and the microlens array 50 is secured to the liquid-crystal panel 14 via the spacer 55.

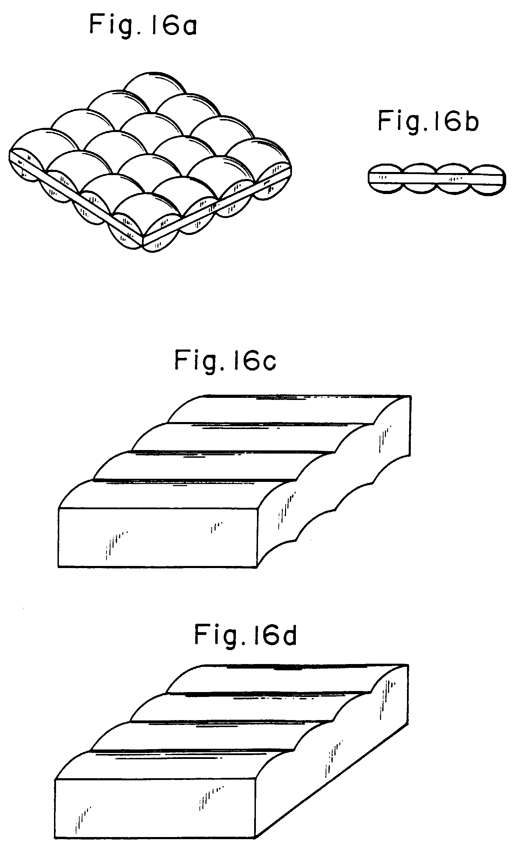

Fig. 16 illustrates other examples of the microlens array 37 or 50.

Figs. 16a and 16b illustrate a microlens array in which the microlenses are realized by double-convex lenses.

Figs. 16c and 16d illustrate examples of cylindrical lenses. Thus, it is possible to use cylindrical lenses as the lenses of the microlens array 37 or 50. Since the condensing action takes place in only one direction, there is a decline in the efficiency at which the light is condensed on the apertures A inside the liquid-crystal panel, but an advantage is that manufacture is easy owing to the simple structure of this arrangement. Similarly, the frustum optical-element array also may be replaced by an array of optical elements having an inclined surface in one direction only. In such case, linear virtual light sources would be formed.

Though the foregoing embodiment relates to a liquid-crystal TV projector, it goes without saying that the invention is applicable also to an ordinary liquid-crystal display device (a liquid-crystal television or the like).

**Claims**

1. An image display device comprising:

   a light source;
   a liquid crystal panel (14) having two transparent plates (21,22) and a liquid crystal filled between said transparent plates, one of said transparent plates having formed thereon a plurality of pixel electrodes (26) and a plurality of conductive patterns (24A,24B) arranged between said pixel electrodes such that said conductive patterns apply a signal for controlling a voltage applied to each respective pixel electrode;
   a first condensing element array (37) comprising a plurality of two-dimensionally arrayed condensing optical elements (38), said first array being positioned on the light source side of said liquid crystal panel (14); and
   a second condensing element array (40) comprising a plurality of two-dimensionally arrayed condensing optical elements (41);
   wherein respective elements of both arrays (37,40) and also respective pixel electrodes (26) are aligned in one-to-one correspondence;

   characterized in that
   said second condensing element array (40) is positioned on the light source side of said first condensing element array (37) and is spaced apart from said first condensing element array (37) such that each element (41) of said second condensing element array (40) forms a virtual image of said light source in the space between said two arrays (37,40) at a position in alignment with the corresponding element (38) of said first condensing element array (37), and such that beyond said virtual image position the light diverges and is then condensed by the corresponding element of said first condensing element array (37) onto the corresponding pixel electrode (26).

2. The image display device according to claim 1, characterized in that said condensing optical element (41) of said second condensing element array (40) is a frustum optical element having an aperture (41b, 43b) on a light-incident side and an aperture, (41a, 43a) on a light-emergent side smaller than the aperture on the light-incident side, wherein light from said light source incident upon the aperture on the light-incident side emerges from the aperture on the light-emergent side to form the virtual image of said light source.

3. The image display device according to claim 2, characterized in that said frustum optical element (41) has a peripheral side surface and introduces the light incident upon the aperture on the light-incident side to the aperture on the light-emergent side by total reflection at said peripheral side surface.

4. The image display device according to claim 2, characterized in that said frustum optical element (43) has a peripheral side surface the inner side of which is provided with a specular reflector surface (44), and introduces the light incident upon the aperture on the light-incident side to the aperture on the light-emergent side by reflection at said specular reflector surface.

5. The image display device according to claim 2, characterized in that said frustum optical element (41) is constituted by a transparent body and has a distal end, said distal end being sectioned so as to form said aperture (41) on the light-emergent side.

6. The image display device according to claim 1, characterized in that said image display device further comprises two polarizers, one placed at a position in back of and the other at a position in front of said liquid-crystal panel (14), said polarizers having directions of polarization which perpendicularly intersect each other.

7. The image display device according to claim 6, characterized in that one (15) of said polarizers is disposed between said light source and said second condensing element array (40).

8. The image display device according to claim 6, characterized in that one (15) of said polarizers is disposed between said first condensing element array (37) and said liquid-crystal panel (14).

9. The image display device according to claim 8, characterized in that said one of said polarizers is a polarizing film.

10. The image display device according to claim 8, characterized in that said one of said polarizers is one of said transparent plates (21) of said liquid-crystal panel (14) and is constituted by a polarizing plate.

11. The image display device according to claim 8, characterized in that said first condensing element array (37) comprises a substrate (39) and a plurality of said condensing optical elements (38) arrayed two-dimensionally on said substrate, and said one of said polarizers is said substrate (39) and is a polarizing plate.

12. The image display device according to claim 1, characterized in that said second condensing element array (40) forms a plurality of linear virtual images of said light source respectively corresponding to a plurality of said pixel electrodes (26).

13. The image display device according to claim 1, characterized in that said first condensing element array (37) condenses the incident light into a plurality of lines in such a manner that the respective lines correspond to a plurality of said pixel electrodes (26).

14. A liquid-crystal TV projector including the image display device according to any one of claims 1 to 13, characterized in that the liquid-crystal TV projector further comprises:

a first optical system for condensing light from said light source and projecting the light upon said liquid-crystal panel (14); and
a second optical system for projecting light, which has been transmitted by said liquid-crystal panel (14), upon a screen.

15. A frustum optical-element array comprising a plurality of two-dimensionally arrayed frustum optical elements (41,43), each frustum optical element having an aperture on a light-incident side (41b, 43b) and an aperture (41a, 43a) on a light-emergent side smaller than the aperture on the light-incident side, wherein light incident upon the aperture on the light-incident side emerges from the aperture on the light-emergent side.

16. The frustum optical-element array according to claim 15, wherein each frustum optical element (41) has a peripheral side surface and introduces the light incident upon the aperture (41b) on the light-incident side to the aperture (43b) on the light-emergent side by total reflection at said peripheral side surface.

17. The frustum optical-element array according to claim 15, wherein each frustum optical element (43) has a peripheral side surface the inner side of which is provided with a specular reflector surface (44), and introduces the light incident upon the aperture (43b) on the light-incident side to the aperture (43a) on the light-emergent side by reflection at said specular reflector surface.

18. The frustum optical-element array according to claim 15, wherein each frustum optical element (41) is constituted by a transparent body and has a distal end, said distal end being sectioned so as to form said aperture on the light-emergent side.

**Patentansprüche**

1. Bildanzeigevorrichtung mit

einer Lichtquelle,
einem Flüssigkristallfeld (14) mit zwei transparenten Platten (21, 22) und zwischen den transparenten Platten eingefülltem Flüssigkristall, wobei auf einer der transparenten Platten eine Anzahl von Pixelelektroden (26) und eine Anzahl von zwischen den Pixelelektroden so angeordneten leitfähigen Mustern (24A, 24B), daß die leitfähigen Muster ein Signal zur Steuerung einer an die einzelnen Pixelelektroden angelegten Spannung anlegen, ausgebildet ist,
einem ersten Konzentrationselementfeld (37), welches eine Anzahl von zweidimensional angeordneten optischen Konzentrationselementen (38) aufweist, wobei das erste Feld auf der Lichtquellenseite des Flüssigkristallfeldes (14) angeordnet ist, und
einem zweiten Konzentrationselementfeld (40) mit einer Anzahl von zweidimensional angeordneten optischen Konzentrationselementen (41),
wobei die betreffenden Elemente beider Felder (37, 40) und ebenso betreffende Pixelelektroden (26) in Eins-zu-eine-Entsprechung ausgerichtet sind,

dadurch gekennzeichnet, daß
das zweite Konzentrationselementfeld (40) auf der Lichtquellenseite des ersten Konzentrationselementfelds (37) angeordnet ist und von dem ersten Konzentrationselementfeld (37) so im Abstand liegt, daß jedes Element (41) des zweiten Konzentrationselementfelds (40) ein virtuelles Bild der Lichtquelle in dem Raum zwischen den beiden Feldern (37, 40) an einer Stelle in Ausrichtung mit dem entsprechenden Element (38) des ersten Konzentrationselementfelds (37) ausbildet, und so, daß jenseits des Orts des virtuellen Bildes das Licht divergiert und dann durch das korrespondierende Element des ersten Konzentrationselementfelds (37) auf die entsprechende Pixelelektrode (26) konzentriert wird.

2. Bildanzeigevorrichtung nach Anspruch 1, dadurch gekennzeichnet, daß das optische Konzentrationselement (41) ein optisches Stumpfelement mit einer Apertur (41b, 43b) auf der Lichteinfallsseite und einer Apertur (41a, 43a) auf der Lichtaustrittsseite, die kleiner als die Apertur auf der Lichteinfallsseite ist, ist, wobei Licht der Lichtquelle, das auf die Apertur auf der Lichteinfallsseite auftrifft, aus der Apertur auf der Lichtaustrittsseite das virtuelle Bild der Lichtquelle bildend austritt.

3. Bildanzeigevorrichtung nach Anspruch 2, dadurch gekennzeichnet, daß das optische Stumpfelement (41) eine Randseitenfläche aufweist und das auf die Apertur auf der Lichteinfallsseite auftreffende Licht in die Apertur auf der Lichtaustrittsseite durch Totalreflexion an den Randseitenflächen einführt.

4. Bildanzeigevorrichtung nach Anspruch 2, dadurch gekennzeichnet, daß das optische Stumpfelement (43) eine Randseitenfläche aufweist, deren Innenseite mit einer Spiegelreflektorfläche (44) versehen ist, und das auf die Apertur auf der Lichteinfallsseite einfallende Licht in die Apertur auf der Lichtaustrittsseite durch Reflexion an den Spiegelreflektorflächen einführt.

5. Bildanzeigevorrichtung nach Anspruch 2, dadurch gekennzeichnet, daß das optische Stumpfelement (41) durch einen transparenten Körper gebildet ist und ein distales Ende aufweist, wobei das distale Ende so geschnitten ist, daß es die Apertur (41) auf der Lichtaustrittsseite bildet.

6. Bildanzeigevorrichtung nach Anspruch 1, dadurch gekennzeichnet, daß die Bildanzeigevorrichtung ferner zwei Polarisatoren aufweist, von denen der eine hinter und der andere vor dem Flüssigkristallfeld (14) angeordnet ist, wobei die Polarisatoren Polarisationsrichtungen haben, die einander senkrecht schneiden.

7. Bildanzeigevorrichtung nach Anspruch 6, dadurch gekennzeichnet, daß einer (15) der Polarisatoren zwischen der Lichtquelle und dem zweiten Konzentrationselementfeld (40) angeordnet ist.

8. Bildanzeigevorrichtung nach Anspruch 6, dadurch gekennzeichnet, daß einer (15) der Polarisatoren zwischen dem ersten Konzentrationselementfeld (37) und dem Flüssigkristallfeld (14) angeordnet ist.

9. Bildanzeigevorrichtung nach Anspruch 8, dadurch gekennzeichnet, daß der eine der Polarisatoren ein polarisierender Film ist.

10. Bildanzeigevorrichtung nach Anspruch 8, dadurch gekennzeichnet, daß der eine der Polarisatoren eine der transparenten Platten (21) des Flüssigkristallfelds (14) ist und durch eine polarisierende Platte gebildet ist.

11. Bildanzeigevorrichtung nach Anspruch 8, dadurch gekennzeichnet, daß das erste Konzentrationselementfeld (37) ein Substrat (39) und eine Anzahl der optischen Kondensationselemente (38) aufweist, die zweidimensional auf dem Substrat angeordnet sind, wobei der eine der Polarisatoren das Substrat (39) ist und eine polarisierende Platte ist.

12. Bildanzeigevorrichtung nach Anspruch 1, dadurch gekennzeichnet, daß das zweite Konzentrationselementfeld (40) eine Anzahl von linearen virtuellen Bildern der Lichtquelle bildet, die jeweils einer Anzahl der Pixelelektroden (26) entsprechen.

13. Bildanzeigevorrichtung nach Anspruch 1, dadurch gekennzeichnet, daß das erste Konzentrationselementfeld (37) das einfallende Licht in eine Anzahl von Linien in einer solchen Weise konzentriert, daß die einzelnen Linien einer Anzahl der Pixelelektroden (26) entsprechen.

14. Flüssigkristall-TV-Projektor mit einer Bildanzeigevorrichtung nach irgendeinem der Ansprüche 1 bis 13, dadurch gekennzeichnet, daß der Flüssigkristall-TV-Projektor ferner

ein erstes optisches System zum Konzentrieren von Licht der Lichtquelle und Einstrahlen des Lichts auf das Flüssigkristallfeld (14), und ein zweites optisches System zum Einstrahlen von Licht, welches von dem Flüssigkristallfeld (14) durchgelassen worden ist, auf einen Schirm aufweist.

15. Feld optischer Stumpfelemente mit einer Anzahl von zweidimensional angeordneten optischen Stumpfelementen (41, 43), wobei jedes optische Stumpfelement eine Apertur auf einer Lichteinfallsseite (41b, 43b) und eine Apertur (41a, 43a) auf einer Lichtaustrittsseite aufweist, die kleiner als die Apertur auf der Lichteinfallsseite ist, wobei auf die Apertur auf der Lichteinfallsseite auftreffendes Licht aus der Apertur auf der Lichtaustrittsseite austritt.

16. Feld optischer Stumpfelemente nach Anspruch 15, wobei jedes optisches Stumpfelement (41) eine Randseitenfläche aufweist und das auf die Apertur (41b) auf der Lichteinfallsseite einfallende Licht in die Apertur (43b) auf der Lichtaustrittsseite durch Totalreflexion an den Randseitenflächen einführt.

17. Feld optischer Stumpfelemente nach Anspruch 15, wobei jedes optische Stumpfelement (43) eine Randseitenfläche aufweist, deren Innenseite mit einer Spiegelreflexionsfläche (44) versehen ist, und das auf die Apertur (43b) auf der Lichteinfallsseite einfallende Licht in die Apertur (43a) auf der Lichtaustrittsseite durch Reflexion an den spiegelnden Reflektorflächen einführt.

18. Feld optischer Stumpfelemente nach Anspruch 15, wobei jedes optisches Stumpfelement (41) durch einen transparenten Körper gebildet ist und ein distales Ende aufweist, wobei das distale Ende so geschnitten ist, daß es die Apertur an der Lichtaustrittsseite ausbildet.

**Revendications**

1. Un dispositif d'affichage d'images comprenant:

    une source lumineuse;
    un panneau (14) à cristaux liquides comportant deux lames transparentes (21, 22) et un cristal liquide qui remplit l'intervalle entre lesdites lames transparentes, une série d'électrodes (26) de pixels et une série de configurations conductrices (24a, 24b) agencées entre lesdites électrodes de pixels étant formées sur l'une desdites lames transparentes d'une manière telle que lesdites configurations conductrices appliquent un signal destiné à commander à une tension appliquée à chaque électrode respective de pixel:
    un premier réseau (37) d'élément condensateurs, qui comprend une série d'éléments optiques condensateurs (38) agencés en un réseau bidimensionnel, ledit premier réseau étant positionné sur le côté source lumineuse dudit panneau (14) de cristaux liquides; et
    un deuxième réseau (40) d'éléments condensateurs (40), qui comprend une série d'éléments optiques condensateurs agencés en un réseau bidimensionnel;
    des éléments respectifs des deux réseaux (37, 40) ainsi que des électrodes respectives (26) de pixels étant alignés selon une correspondance biunivoque;

    caractérisé en ce que

    ledit deuxième réseau (40) d'éléments condensateurs est positionné sur le côté source lumineuse dudit premier réseau (37) d'éléments condensateurs et est espacé dudit premier réseau (37) d'éléments condensateurs d'une manière telle que chaque élément (41) dudit deuxième réseau (40) d'éléments condensateurs forme une image virtuelle de ladite source lumineuse dans l'espace compris entre les deux réseaux (37, 40) à une position située en alignement avec l'élément correspondant (33) dudit premier réseau (37) d'éléments condensateurs, et d'une manière telle que la lumière diverge au-delà de ladite position d'image virtuelle et est ensuite condensée sur l'électrode correspondante (26) de pixel par l'élément correspondant dudit premier réseau (37) d'éléments condensateurs.

2. Le dispositif d'affichage d'images selon la revendication 1, caractérisé en ce que ledit élément optique condensateur (41) dudit deuxième réseau (40) d'éléments condensateurs est un élément optique tronqué comportant une ouverture (41b, 43b) située sur un côté d'incidence de la lumière et une ouverture (41a, 43a) située sur un côté d'émergence de la lumière et plus petite que l'ouverture située sur le côté d'incidence de la lumière, la lumière de ladite source lumineuse incidente sur l'ouverture du côté d'incidence de la lumière émergeant de l'ouverture du côté d'émergence de la lumière de manière à former l'image virtuelle de ladite source lumineuse.

3. Le dispositif d'affichage d'images selon la revendication 2, caractérisé en ce que ledit élément optique tronqué (41) comporte une surface latérale périphérique et introduit à l'ouverture située du côté d'émergence de la lumière, par une réflexion totale à ladite surface latérale périphérique, la lumière incidente sur l'ouverture du côté d'incidence de la lumière.

4. Le dispositif d'affichage d'images selon la revendication 2, caractérisé en ce que ledit élément optique tronqué (43) comporte une surface latérale périphérique dont le côté intérieur comporte une surface réfléchissante spéculaire (44), et introduit à l'ouverture située sur le côté d'émergence de la lumière, par une réflexion totale à ladite surface réfléchissante spéculaire, la lumière incidente sur l'ouverture du côté d'incidence de la lumière.

5. Le dispositif d'affichage d'images selon la revendication 2, caractérisé en ce que ledit élément tronqué (41) est constitué par un corps transparent et comporte une extrémité distale, ladite extrémité distale étant sectionnée de manière à former ladite ouverture (41) située sur le côté d'émergence de la lumière.

6. Le dispositif d'affichage d'images selon la revendication 1, caractérisé en ce que ledit dispositif d'affichage d'images comprend en outre deux polariseurs, le premier placé à une position située en arrière dudit panneau (14) de cristaux liquides et l'autre à une position située en avant de ce panneau, les directions de polarisation desdits polariseurs se coupant perpendiculairement entre elles.

7. Le dispositif d'affichage d'images selon la revendication 6, caractérisé en ce qu'un premier (15) desdits polariseurs est disposé entre ladite source lumineuse et ledit deuxième réseau (40) d'éléments condensateurs.

8. Le dispositif d'affichage d'images selon la revendication 6, caractérisé en ce qu'un premier (15) desdits polariseurs est disposé entre ledit premier réseau (37) d'éléments condensateurs et ledit panneau (14) de cristaux liquides.

9. le dispositif d'affichage d'images selon la revendication 8, caractérisé en ce que ledit premier desdits polariseurs est un film polarisant.

10. Le dispositif d'affichage d'images selon la revendication 8, caractérisé en ce que ledit premier desdits polariseurs est l'une des desdites lames transparentes (21) dudit panneau (14) à cristaux liquides et est constitué par une lame polarisante.

11. le dispositif d'affichage d'images selon la revendication 8, caractérisé en ce que ledit premier réseau (37) d'éléments condensateurs comprend un substrat (39) et une série desdits éléments optiques condensateurs (38) agencés en un réseau bidimensionnel sur ledit substrat, et ledit premier desdits polariseurs est ledit substrat (39) et est une lame polarisante.

12. Le dispositif d'affichage d'images selon la revendication 1, caractérisé en ce que ledit deuxième réseau (40) d'éléments condensateurs forme une série d'images virtuelles linéaires de ladite source lumineuse qui correspondent respectivement à une série desdites électrodes (26) de pixels.

13. Le dispositif d'affichage d'images selon la revendication 1, caractérisé en ce que ledit premier réseau (37) d'éléments condensateurs condense la lumière incidente en une série de lignes d'une manière telle que les lignes respectives correspondent à une série desdites électrodes (26) de pixels.

14. Un projecteur de télévision à cristaux liquides qui inclut le dispositif d'affichage d'images selon l'une quelconque des revendications 1 à 13, caractérisé en ce que le projecteur de télévision à cristaux liquides comprend en outre:

un premier système optique destiné à condenser la lumière venant de la source lumineuse et à projeter la lumière sur ledit panneau (14) à cristaux liquides; et
un deuxième système optique destiné à projeter sur un écran une lumière qui a été transmise par ledit panneau (14) à cristaux liquides.

15. Un réseau d'éléments optiques tronqués comprenant une série d'éléments optiques tronqués (41, 43) agencés en réseaux bidimensionnels, chaque élément optique tronqué comportant une ouverture (41b, 43b) située sur un côté d'incidence de la lumière et une ouverture (41a, 43a) située sur un côté d'émergence de la lumière et plus petite que l'ouverture située sur le côté d'incidence de la lumière, la lumière de ladite source lumineuse incidente sur l'ouverture du côté d'incidence de la lumière émergeant de l'ouverture du côté d'émergence de la lumière.

16. Le réseau d'éléments optiques tronqués selon la revendication 15, dans lequel chaque élément optique tronqué (41) comporte une surface latérale périphérique et introduit à l'ouverture (43b ) située du côté d'émergence de la lumière, par une réflexion totale à ladite surface latérale périphérique, la lumière incidente sur l'ouverture (41b) du côté d'incidence de la lumière.

17. Le réseau d'éléments optiques tronqués selon la revendication 15, dans lequel chaque élément optique tronqué (43) comporte une surface latérale périphérique dont le côté intérieur comporte une surface réfléchissante spéculaire (44), et introduit à l'ouverture (43a) située sur le côté d'émergence de la lumière, par une réflexion totale à ladite surface réfléchissante spéculaire, la lumière incidente sur l'ouverture (43b) du côté d'incidence de la lumière.

18. Le réseau d'éléments optiques tronqués selon la revendication 15, dans lequel chaque élément tronqué (41) est constitué par un corps transparent et comporte une extrémité distale, ladite extrémité distale étant sectionnée de manière à former ladite ouverture située sur le côté d'émergence de la lumière.

Fig. 1    PRIOR ART

12

Fig. 2    PRIOR ART

INCIDENT LIGHT

Fig.3    PRIOR ART

# Fig. 4

INCIDENT LIGHT

Fig.5

PRIOR ART

EP 0 518 362 B1

Fig.6

PRIOR ART

POSITION

INTENSITY

14

24

E

A

37

38

θ

L1

L2

17

# Fig.7

INCIDENT LIGHT

## Fig.8a

## Fig.8b

Fig. 9

Fig. 10

EP 0 518 362 B1

Fig.11

EP 0 518 362 B1

# Fig.12

INCIDENT LIGHT

# Fig.13

EP 0 518 362 B1

# Fig.14

EP 0 518 362 B1

# Fig.15a

# Fig.15b

Fig. 16a

Fig.16b

Fig. 16c

Fig. 16d